# FASCICULE DE BREVET EUROPEEN

(11) **EP 2 870 032 B1**
(45) Date de publication et mention de la délivrance du brevet: **05.08.2020**
(21) Numéro de dépôt: 13733385.2
(22) Date de dépôt: 11.06.2013
(51) Int. Cl.: B60R 11/02

(54) **SYSTEME DE HAUT-PARLEUR POUR VEHICULE AUTOMOBILE**
LAUTSPRECHERSYSTEM FÜR EIN KRAFTFAHRZEUG
LOUDSPEAKER SYSTEM FOR A MOTOR VEHICLE

(30) Priorité: 03.07.2012 FR 1256367
(43) Date de publication de la demande: 13.05.2015
(73) Titulaire: Renault S.A.S., 92100 Boulogne-Billancourt (FR)
(72) Inventeur: PANHELLEUX, Jerome, F-75015 Paris (FR); GUYADER, Gael, F-28210 Chaudon (FR); LEBORGNE, Eric, F-28940 Aubevoye (FR)
(86) Numéro de dépôt international: PCT/FR2013/051345
(87) Numéro de publication internationale: WO 2014/006290

(56) Documents cités:
- EP-A2- 0 523 410
- DE-A1- 19 834 878
- FR-A1- 2 762 263

## Description

L'invention a pour domaine technique les haut-parleurs, et plus particulièrement les haut-parleurs intégrés dans un véhicule automobile.

Les haut-parleurs généralement intégrés dans un véhicule automobile présentent des difficultés à reproduire les basses fréquences en utilisant le volume disponible. La solution technique actuelle consiste à utiliser le volume d'air présent dans les portes du véhicule. En effet, pour reproduire les basses fréquences, les haut-parleurs doivent être positionnés sur un volume conséquent qui sert alors d'enceinte acoustique (environ 30 litres sur un véhicule Renault Clio ® de troisième génération). Malheureusement ce volume présente des défauts acoustiques ne permettant pas de l'utiliser au mieux comme une enceinte acoustique. Les trous techniques et les différentes fuites (passage de vitre par exemple) sont très défavorables pour la qualité de restitution sonore.

Pour forcer l'obtention des basses fréquences, on utilise généralement un traitement du signal sonore par application de filtres. On peut également utiliser des haut-parleurs plus performants. Toutefois, aucune de ces solutions ne permet d'assurer la qualité et la constance de la restitution sonore, tandis que l'impact sur le coût du véhicule est avéré.

Afin de disposer de la meilleure prestation sonore quel que soit le prix du véhicule, il est possible d'employer une boite restreinte, équipée d'une tuyère pour créer un système « bass reflex ». On rappelle que le système de haut-parleur dit « bass reflex » consiste à renvoyer l'onde arrière générée par les mouvements de la membrane du haut-parleur vers l'utilisateur. Aux basses fréquences, le haut-parleur peut alors travailler plus naturellement, en excitant l'air dans le volume qui lui est accessible afin de construire des basses fréquences puissantes et précises.

Un tel dispositif est décrit dans le document FR2762263. On connait également des dispositifs de ce type dans l'équipement domestique dit de haute fidélité.

Lorsqu'elle est appliquée à l'automobile, cette technologie implique de disposer d'un volume homogène de plusieurs litres situé dans la porte du véhicule et équipé d'une tuyère et d'un haut-parleur donnant dans l'habitacle. Le volume de l'enceinte acoustique ainsi créé est parfaitement maitrisé et sans fuite ou différence de comportement acoustique tributaire de la position de la vitre (ouverte ou fermée).

Il est alors nécessaire de considérer la structure d'une porte de véhicule automobile. En effet, elle comprend généralement au moins une charnière, des renforts latéraux, des vitres coulissantes à mécanisme manuel ou électrique, ainsi qu'un système de verrouillage électronique ou à clé. Ces éléments occupent une partie du volume de la porte et impliquent certaines contraintes en termes de positionnement et de volume. Les éléments d'agrément, tels que les haut-parleurs, doivent alors être logés dans les volumes et emplacements restants.

Il apparaît ainsi que l'intégration d'un haut-parleur apte à restituer les basses fréquences dans une porte de véhicule automobile est particulièrement complexe et constitue un problème qui n'est pas résolu à l'heure actuelle.

Il existe un problème technique pour installer un haut-parleur apte à restituer les basses fréquences dans les portes d'un véhicule automobile.

Un objet de l'invention est un système de haut-parleur apte à être disposé dans la porte d'un véhicule automobile. Le système de haut-parleur comprend un boîtier pourvu de deux ouvertures, une première ouverture recevant une tuyère apte à mettre en relation le volume intérieur du boîtier avec l'habitacle du véhicule, une deuxième ouverture du boîtier recevant un haut-parleur, le boîtier étant apte à être disposé lui-même dans une ouverture ménagée dans une paroi intérieure du caisson de porte. Le boîtier comprenant deux parties, un boîtier intérieur apte à être tourné vers l'habitacle du véhicule et supportant le haut-parleur, et un boîtier extérieur apte à être tourné vers l'extérieur du véhicule et inséré à l'intérieur du caisson de porte. Le boîtier extérieur comprend un rebord muni d'un joint apte à maintenir l'étanchéité de la porte par appui sur la paroi intérieure du caisson de porte.

Le haut-parleur peut être disposé dans la deuxième ouverture du boîtier de sorte que le diaphragme du haut-parleur soit dirigé vers l'habitacle et que le volume du haut-parleur présent derrière le diaphragme soit contenu et mis en relation avec le volume intérieur du boîtier.

La tuyère peut être munie d'une bouche extérieure apte à être disposée entre la paroi intérieure du caisson de porte et un habillage intérieur de la porte.

La tuyère est apte à déboucher dans l'épaisseur d'un l'habillage intérieur de la porte.

Le boîtier peut présenter des dimensions sensiblement similaires selon toutes les directions afin d'obtenir une forme compacte et homogène.

Le boîtier peut présenter un volume inférieur à dix litres, de préférence inférieur à cinq litres.

Le boîtier peut présenter un volume inférieur à cinq litres, de préférence entre deux et trois litres.

La tuyère peut être dirigée essentiellement vers le bas et vers l'avant, tout en s'écartant légèrement du caisson de porte au niveau de la bouche d'extrémité.

La tuyère peut être dirigée essentiellement vers le bas et vers l'arrière, tout en s'écartant légèrement du caisson de porte au niveau de la bouche d'extrémité.

L'invention a aussi trait à une porte pour véhicule automobile comportant un caisson de porte dont une paroi intérieure comprend une ouverture au travers de laquelle est disposé un système de haut-parleur ayant les caractéristiques susmentionnées.

D'autres buts, caractéristiques et avantages apparaîtront à la lecture de la description suivante donnée uniquement en tant qu'exemple non limitatif et faite en référence aux figures annexées, sur lesquelles :
- la figure 1 illustre une vue de profil d'un système de haut-parleur,
- la figure 2 illustre une vue latérale du système de haut-parleur,
- la figure 3 illustre une vue éclatée du système de haut-parleur,
- la figure 4 illustre une autre vue éclatée du système de haut-parleur,
- la figure 5 illustre une vue latérale de la structure de porte avec le système de haut-parleur, et
- la figure 6 illustre une vue latérale de la porte avec habillage et grille de haut-parleur.

Dans la suite de la description, les conventions suivantes sont utilisées. Le repère X désigne la direction longitudinale du véhicule, orienté vers l'arrière. Le repère Y désigne la direction transversale du véhicule, orienté vers la droite. Le repère Z désigne la direction verticale vers le haut. Les termes « vers l'intérieur » et « vers l'extérieur » sont donnés par rapport à l'habitacle du véhicule : ce qui est dirigé « vers l'extérieur » est dirigé vers l'extérieur de l'habitacle, ce qui est dirigé « vers l'intérieur » est dirigé vers l'intérieur de l'habitacle.

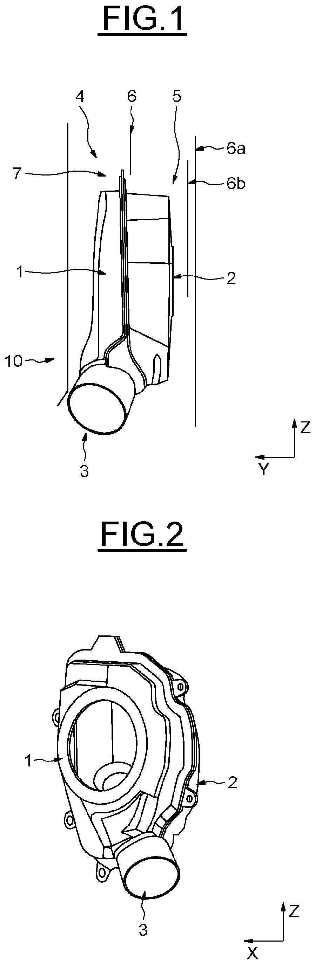

La figure 1 illustre une vue de profil d'un système de haut-parleur selon l'invention comprenant un boîtier interne 1, un boîtier externe 2 et une tuyère 3. L'ensemble est également vu selon la tranche de la portière. Plus particulièrement, la figure 1 illustre certaines contraintes dues à la structure de la porte et aux différents éléments présents dans celle-ci sur le système de haut-parleur.

Une première contrainte est ergonomique. Il est en effet nécessaire que l'utilisateur puisse ouvrir suffisamment sa portière pour pouvoir sortir de son véhicule même lorsque la distance à un obstacle parallèle au véhicule est faible (notamment 450 mm). Cela implique une limite de l'épaisseur ou du volume de l'habillage de porte en direction de l'intérieur de l'habitacle.

La structure de porte implique une contrainte relative à l'extension avant (en X) et basse (en Z). Le renfort de porte destiné au choc frontal implique une contrainte relative à l'extension haute (en Z). La présence d'une zone de rangement et d'un renfort de porte destiné au choc latéral implique une contrainte relative à l'extension arrière (en X). Enfin le parcours de la vitre 6b implique une contrainte relative à l'extension extérieure.

Pour intégrer un haut-parleur « bass reflex » et respecter les contraintes décrites ci-dessus, le volume de la zone étanche 4 du caisson de porte est insuffisant. On empiète donc sur la zone humide 5 afin de gagner du volume sur l'épaisseur (en Y) de la porte. Le système traverse donc la paroi intérieure 6 du caisson de porte. Toutefois, l'étanchéité est maintenue par l'intermédiaire d'un joint situé sur la zone périphérique du système « bass reflex ». Une telle conception confère une meilleure étanchéité au système par rapport aux systèmes dans lesquels le joint se trouve sur la zone périphérique du haut-parleur.

En d'autres termes, la porte est équipée d'une enceinte acoustique pourvue d'un boîtier à tuyère intégré à la structure de porte. La structure de porte comprend une paroi intérieure 6 du caisson de porte, une paroi extérieure 6a du caisson de porte et une vitre 6b soumise à un parcours vertical. Le boîtier à tuyère comprend deux parties, un boîtier intérieur 1 et un boîtier extérieur 2. Le boîtier intérieur 1 est fixé au boîtier extérieur 2 par soudure. Le boîtier et la tuyère sont notamment réalisés en polypropylène. Dans des variantes de réalisation, ils peuvent être réalisés dans d'autres matériaux plastiques sans sortir du cadre de l'invention.

Le boîtier extérieur 2 (tourné vers l'extérieur du véhicule) est inséré dans la zone humide à l'intérieur du caisson de porte, tandis que le boîtier intérieur 1 (tourné vers l'habitacle du véhicule) supporte le haut-parleur. Le boîtier a une forme compacte dont les dimensions sont les plus homogènes possible dans toutes les directions. Le volume du boîtier est de préférence inférieur à 5 litres, typiquement de l'ordre de 2,5 à 3 litres ce qui correspond approximativement à un équivalent volume de porte de 30 litres avec une intégration conventionnelle. Un volume de boîtier inférieur à 5 litres correspond à une construction optimale. Dans une variante de réalisation non illustrée de l'invention, on peut admettre, sans sortir du cadre de l'invention, que le boîtier ait un volume supérieur à 5 litres, par exemple un volume compris entre 5 et 10 litres, le volume ainsi occupé par le boîtier restant significativement inférieur à un volume de porte de 30 litres correspondant à une intégration conventionnelle.

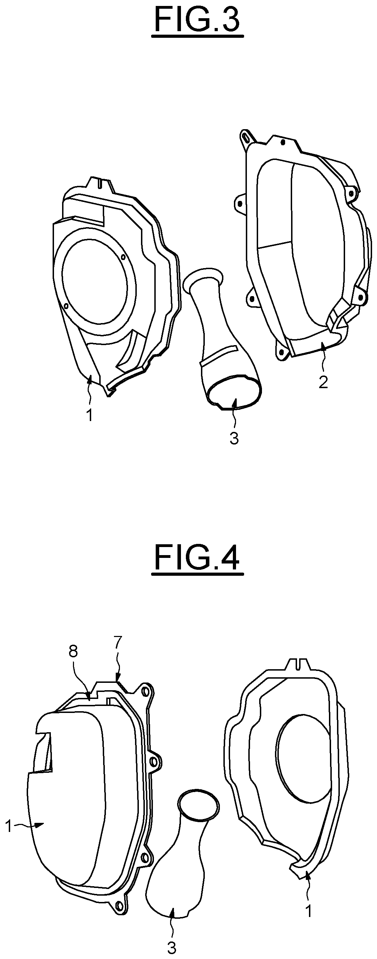

La figure 2 illustre le système de haut-parleur à proprement parler en vue latérale. On peut voir le boîtier intérieur 1 assemblé avec le boîtier extérieur 2, l'ensemble formant un boîtier ou boite, dans laquelle sont ménagées deux ouvertures. La première est destinée à être obturée par le haut-parleur (non représenté sur la figure 2) tandis que la deuxième est équipée de la tuyère 3 acoustique. Les figures 3 et 4 montrent des vues éclatées du système de haut-parleur.

Comme expliqué plus haut, le boîtier pénètre dans le volume intérieur (zone humide) du caisson. La figure 4 illustre une vue éclatée du système de haut-parleur montrant un rebord 7 du boîtier extérieur 2 et supportant un joint 8.

Comme on peut le voir, seul le boîtier extérieur 2 comporte un rebord 7 s'appuyant sur le bord périphérique d'une ouverture réalisée dans la paroi intérieure 6 du caisson de porte afin de former un appui étanche via un joint 8, notamment un joint en mousse. Ce rebord 7 comporte des pattes ou extensions radiales assurant la fixation par rivets sur la paroi intérieure du caisson de porte. On compte typiquement six rivets de fixation uniformément répartis sur la périphérie du caisson.

En d'autres termes, le rebord 7 et le joint 8 coopèrent avec la paroi intérieure 6 du caisson de porte afin de maintenir l'étanchéité.

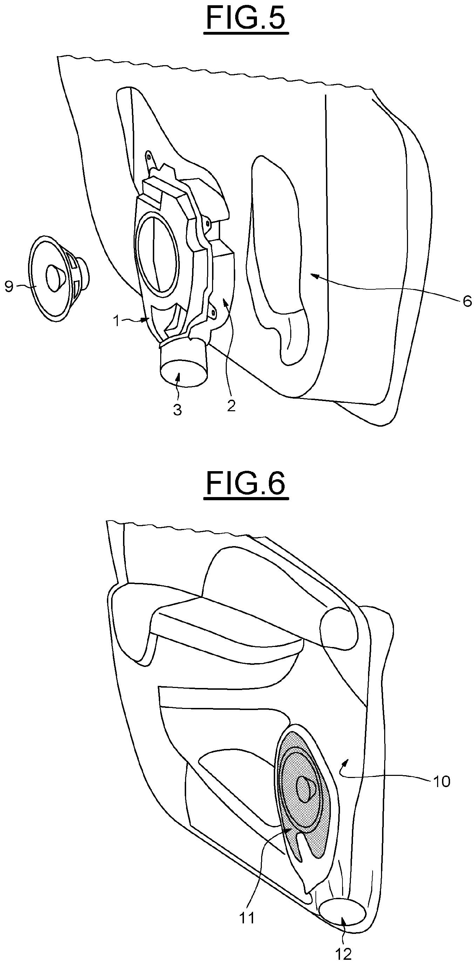

La figure 5 illustre le positionnement du système de haut-parleur dans la structure de porte, ainsi que le positionnement du haut-parleur 9 dans le système de haut-parleur. On peut notamment voir l'ouverture ménagée dans la paroi intérieure 6 du caisson de porte dans lequel pénètre le système de haut-parleur.

Sur la figure 6, on peut voir la structure de porte munie d'un système de haut-parleur et recouverte d'un habillage 10 de porte. Le haut-parleur 9 est alors recouvert par une grille 11 cerclée par un enjoliveur.

La tuyère 3 permet de mettre en communication le volume intérieur du boîtier avec l'intérieur de l'habitacle. Elle est pourvue d'une bouche extérieure 12 disposée entre le caisson de porte et l'habillage 10 de la porte. La bouche extérieure 12 de la tuyère présente un encombrement extérieur réduit au maximum de par la présence de conformations concaves dans la paroi intérieure du caisson de porte et de l'habillage 10.

Dans un premier mode de réalisation, la tuyère 3 est dirigée essentiellement vers le bas et vers l'avant, avec une composante en Y de manière à s'écarter légèrement du caisson de porte au niveau de la bouche d'extrémité.

Dans un second mode de réalisation, la tuyère 3 est dirigée essentiellement vers le bas et vers l'arrière, toujours avec une tendance à s'éloigner du caisson de porte au niveau de la bouche d'extrémité.

Ce choix vers l'avant ou l'arrière de la tuyère dépend des contraintes d'implantation, de style, d'ergonomie qui sont à prendre en compte et des priorités qui sont données.

L'habillage du côté de l'habitacle présente une forme bombée ou convexe induit par le fait que cet habillage épouse la forme extérieure de la tuyère. La forme creuse réalisée par emboutissage dans la paroi intérieure du caisson de porte est enfoncée d'environ 25 mm par rapport à une paroi intérieure de caisson de porte dépourvue d'un système « bass reflex ».

L'invention permet de réduire le diamètre extérieur du haut-parleur pour un rendu sonore identique à celui d'un haut-parleur sans évent à tuyère. Typiquement le diamètre du haut-parleur est de l'ordre de 80 à 130 mm au lieu de 165 mm.

On note que le boîtier d'enceinte selon l'invention peut être inséré dans une porte ayant une architecture standard. Il n'est pas nécessaire de redéfinir ou de modifier profondément toute la structure de la porte, ce qui est particulièrement avantageux dans une démarche de standardisation ou de définition technique commune de pièces ou de fonctions aboutissant à des produits différents et à des fonctions plus ou moins riches, selon la gamme ou le niveau d'équipements du véhicule. Seul l'emboutissage est ajusté, ce qui ne remet pas en cause d'autres fonctions de la porte comme la tenue aux chocs par exemple.

Par ailleurs, la disposition du boîtier dans la porte permet de garder un grand volume de rangement dans le bas de porte.

## Revendications

1. Système de haut-parleur apte à être disposé dans un caisson de porte d'un véhicule automobile, le système de haut-parleur comprenant un boîtier (1,2) pourvu de deux ouvertures, une première ouverture recevant une tuyère (3) apte à mettre en relation le volume intérieur du boîtier (1,2) avec l'habitacle du véhicule, une deuxième ouverture du boîtier (1,2) recevant un haut-parleur (9),
le boîtier (1,2) étant apte à être disposé lui-même dans une ouverture ménagée dans une paroi intérieure (6) du caisson de porte,
le boîtier (1, 2) comprenant deux parties, un boîtier intérieur (1) apte à être tourné vers l'habitacle du véhicule et supportant le haut-parleur (9), et un boîtier extérieur (2) apte à être tourné vers l'extérieur du véhicule et inséré à l'intérieur du caisson de porte,
le boîtier extérieur (2) comprenant un rebord (7) muni d'un joint (8) apte à maintenir l'étanchéité de la porte par appui sur la paroi intérieure (6) du caisson de porte.

2. Système selon la revendication 1, dans lequel le haut-parleur (9) est disposé dans la deuxième ouverture du boîtier (1,2) de sorte que le diaphragme du haut-parleur (9) soit dirigé vers l'habitacle et que le volume du haut-parleur (9) présent derrière le diaphragme soit contenu et mis en relation avec le volume intérieur du boîtier (1, 2).

3. Système selon l'une quelconque des revendications précédentes, dans lequel la tuyère (3) est munie d'une bouche extérieure apte à être disposée entre la paroi intérieure (6) du caisson de porte et un habillage intérieur (10) de la porte.

4. Système selon la revendication 1 ou 2, dans lequel la tuyère est apte à déboucher dans l'épaisseur d'un habillage intérieur (10) de la porte.

5. Système selon l'une quelconque des revendications précédentes, dans lequel le boîtier (1,2) présente des dimensions sensiblement similaires selon toutes les directions afin d'obtenir une forme compacte et homogène.

6. Système selon l'une quelconque des revendications précédentes, dans lequel le boîtier (1,2) présente un volume inférieur à dix litres, de préférence inférieur à cinq litres.

7. Système selon l'une quelconque des revendications précédentes, dans lequel le boîtier (1, 2) présente un volume inférieur à cinq litres, de préférence entre deux et trois litres.

8. Système selon l'une quelconque des revendications précédentes ensemble avec la revendication 3, dans lequel la tuyère (3) est dirigée essentiellement vers le bas et vers l'avant, tout en s'écartant légèrement du caisson de porte au niveau de la bouche d'extrémité.

9. Système selon l'une quelconque des revendications 1 à 6 ensemble avec la revendication 3, dans lequel la tuyère (3) est dirigée essentiellement vers le bas et vers l'arrière, tout en s'écartant légèrement du caisson de porte au niveau de la bouche d'extrémité.

10. Porte pour véhicule automobile comportant un caisson de porte dont une paroi intérieure (6) comprend une ouverture au travers de laquelle est disposé un système de haut-parleur selon l'une quelconque des revendications précédentes.

## Patentansprüche

1. Lautsprechersystem, das geeignet ist, in einem Türkasten eines Kraftfahrzeugs angeordnet zu werden, wobei das Lautsprechersystem umfasst:
ein Gehäuse (1, 2), das mit zwei Öffnungen versehen ist,
wobei eine erste Öffnung ein Rohr (3) aufnimmt, das geeignet ist, das Innenvolumen des Gehäuses (1, 2) mit dem Fahrgastraum des Fahrzeugs in Verbindung zu bringen,
eine zweite Öffnung des Gehäuses (1, 2), die einen Lautsprecher (9) aufnimmt,
wobei das Gehäuse (1, 2) geeignet ist, selbst in einer Öffnung angeordnet zu werden, die in einer Innenwand (6) des Türkastens ausgebildet ist,
wobei das Gehäuse (1, 2) zwei Teile umfasst, ein inneres Gehäuse (1), das geeignet ist, zum Fahrgastraum des Fahrzeugs gewandt zu sein, und dabei den Lautsprecher (9) zu tragen, und ein äußeres Gehäuse (2),
das geeignet ist, nach außerhalb des Fahrzeugs gewandt zu sein, und im Inneren des Türkastens eingesetzt ist,
wobei das äußere Gehäuse (2) einen mit einer Dichtung (8) ausgestatteten Rand (7) umfasst, der geeignet ist, die Dichtigkeit der Tür durch Anlage an der Innenwand (6) des Türkastens aufrechtzuerhalten.

2. System nach Anspruch 1, wobei der Lautsprecher (9) in der zweiten Öffnung des Gehäuses (1, 2) derart angeordnet ist, dass die Membran des Lautsprechers (9) zum Fahrgastraum hin gerichtet ist und dass das hinter der Membran vorhandene Volumen des Lautsprechers (9) im Innenvolumen des Gehäuses (1, 2) enthalten und damit in Verbindung gebracht ist.

3. System nach einem der vorhergehenden Ansprüche, wobei das Rohr (3) mit einem äußeren Mundstück versehen ist, das geeignet ist, zwischen der Innenwand (6) des Türkastens und einer Innenverkleidung (10) der Tür angeordnet zu werden.

4. System nach Anspruch 1 oder 2, bei dem das Rohr geeignet ist, in der Dicke einer Innenverkleidung (10) der Tür zu münden.

5. System nach einem der vorhergehenden Ansprüche, bei dem das Gehäuse (1, 2) in alle Richtungen im Wesentlichen gleichartige Abmessungen aufweist, um eine kompakte und homogene Form zu erhalten.

6. System nach einem der vorhergehenden Ansprüche, bei dem das Gehäuse (1, 2) ein Innenvolumen von weniger als zehn Liter, bevorzugt weniger als fünf Liter aufweist.

7. System nach einem der vorhergehenden Ansprüche, bei dem das Gehäuse (1, 2) ein Innenvolumen von weniger als fünf Liter, bevorzugt zwischen zwei und drei Liter aufweist.

8. System nach einem der vorhergehenden Ansprüche in Verbindung mit Anspruch 3, bei dem das Rohr (3) im Wesentlichen nach unten und nach vorne gerichtet ist, wobei es sich auf Höhe des Endmundstücks geringfügig vom Türkasten beabstandet.

9. System nach einem der Ansprüche 1 bis 6 in Verbindung mit Anspruch 3, bei dem das Rohr (3) im Wesentlichen nach unten und nach hinten gerichtet ist, wobei es sich auf Höhe des Endmundstücks geringfügig vom Türkasten beabstandet.

10. Tür für ein Kraftfahrzeug mit einem Türkasten, dessen Innenwand (6) eine Öffnung umfasst, durch die hindurch ein Lautsprechersystem nach einem der vorhergehenden Ansprüche angeordnet ist.

## Claims

1. Loudspeaker system able to be arranged in a door box section of a motor vehicle, the loudspeaker system comprising
a housing (1, 2) provided with two openings, a first opening receiving a nozzle (3) that serves to place the internal volume of the housing (1, 2) in communication with the cabin of the vehicle,
a second opening of the housing (1, 2) receiving a loudspeaker (9),
wherein the housing (1, 2) can itself be arranged in an opening created in an internal wall (6) of the door box section,
the housing (1, 2) comprising two parts, an inner housing (1) that can be oriented towards the cabin of the vehicle and that supports the loudspeaker (9), and an outer housing (2) that can be oriented towards the exterior of the vehicle and is inserted inside the door box section,
the outer housing (2) comprising a rim (7) provided with a seal (8) that is able to maintain the seal of the door by pressing against the internal wall (6) of the door box section.

2. System according to Claim 1, in which the loudspeaker (9) is arranged in the second opening of the housing (1, 2) such that the diaphragm of the loudspeaker (9) is oriented towards the cabin, and such that the volume of the loudspeaker (9) present behind the diaphragm is contained and is placed in communication with the internal volume of the housing (1, 2).

3. System according to either one of the preceding claims, in which the nozzle (3) is provided with an outer mouth that can be arranged between the internal wall (6) of the door box section and an internal trim (10) of the door.

4. System according to Claim 1 or 2, in which the nozzle is able to open into the thickness of an internal trim (10) of the door.

5. System according to any one of the preceding claims, in which the housing (1, 2) has dimensions that are essentially similar in all directions so as to obtain a compact and even shape.

6. System according to any one of the preceding claims, in which the housing (1, 2) has a volume of less than ten litres, preferably less than five litres.

7. System according to any one of the preceding claims, in which the housing (1, 2) has a volume of less than five litres, preferably between two and three litres.

8. System according to any one of the preceding claims, together with Claim 3, in which the nozzle (3) is directed essentially downwards and forwards, while departing slightly from the door box section at the end mouth.

9. System according to any one of Claims 1 to 6, together with Claim 3, in which the nozzle (3) is directed essentially downwards and rearwards, while departing slightly from the door box section at the end mouth.

10. Door for a motor vehicle comprising a door box section, an internal wall (6) of which comprises an opening through which there is arranged a loudspeaker system according to any one of the preceding claims.
